# EUROPÄISCHE PATENTSCHRIFT

(11) **EP 0 300 115 B1**
(45) Veröffentlichungstag und Bekanntmachung des Hinweises auf die Patenterteilung: **06.04.1994**
(21) Anmeldenummer: 88101053.2
(22) Anmeldetag: 26.01.1988
(51) Int. Cl.: A01J 7/00

(54) **Verfahren und Vorrichtung zum maschinellen Ansetzen jeweils eines Zitzenbechers**
Method and device for the mechanical attachment of one teat cup at a time
Procédé et appareil pour la mise en place mécanique un par un de gobelets trayeurs

(30) Priorität: 28.01.1987 DE 3702465
(43) Veröffentlichungstag der Anmeldung: 25.01.1989
(73) Patentinhaber: DÜVELSDORF & SOHN Gmbh & Co. KG, D-28870 Ottersberg (DE)
(72) Erfinder: Düvelsdorf, Adolf, D-2802 Ottersberg (DE); Dück, Mathias, D-2117 Tostedt (DE)
(74) Vertreter: Heldt, Gert, Dr. Dipl.-Ing.

(56) Entgegenhaltungen:
- EP-A- 0 091 892
- EP-A- 0 188 303
- EP-A- 0 213 660
- EP-A- 0 232 568
- FR-A- 2 408 300

## Beschreibung

Die Erfindung betrifft ein verfahren zum maschinellen Ansetzen jeweils eines Zitzenbechers an eine zu melkende Zitze, deren Lage durch einen Sensor geortet und mit einer von einer Ansetzvorrichtung jeweils eingenommenen Stellung verglichen wird, die in Richtung auf die Zitze so lange verändert wird, bis die Ansetzvorrichtung den Zitzenbecher über die Zitze geschoben hat.

Dieses Verfahren ist aus der FR-A-2 408 300 bekanntgeworden und benutzt eine Ansetzvorrichtung, die dazu dient, einen Zitzenbecher unter eine Kuh zu führen und darauf den Zitzenbecher automatisch an eine Zitze anzusetzen. Die Ansetzvorrichtung weist einen U-förmigen Träger auf, der von drei Armen gebildet wird und auf einem Zapfen gelagert ist. Es sind Mittel zum Drehen des Zapfens sowie zum Hoch- und Niederführen des Trägers vorgesehen. Zwei Arme sind als lineare Führungen ausziehbar. Am Ende des Armes befindet sich eine elektronische Kamera, die als Sensor die Lage der zu melkenden Zitze orten soll und eine Halterung zur Aufnahme des Zitzenbechers. Beim Betrieb nimmt die Ansetzvorrichtung einen Zitzenbecher an einem Festpunkt auf und führt eine Schwenkbewegung aus, wodurch der Zitzenbecher unter den Leib der Kuh sowie nach hinten allgemein bis unter ihr Euter geführt wird. Mittels der elektronischen Kamera in Verbindung mit der Elektroniksteuerung wird dann die Lage der Zitze festgestellt, worauf die Steuerung die Bewegung der Ansetzvorrichtung auslöst und diese solange verändert, bis die Ansetzvorrichtung den Zitzenbecher über das Zitzenende geschoben hat.

Der dabei verwendete in der horizontalen Ebene schwenkbare U-förmige Träger hat eine Reihe von Nachteilen, die sich im wesentlichen daraus ergeben, daß der Hebelarm bei einem relativ rauhen Stallbetrieb insbesondere bei der Großviehhaltung sehr häufig Schaden erleiden kann. Dies gilt insbesondere auch für die Antriebselemtente der Führungen, die bei dieser Entgegenhaltung mit in den Bereich der Kuh geschwenkt werden müssen. Der Träger bzw. Schwenkarm wird relativ schwer, was sich nachteilig auf das das gesamte Gewicht tragende Schwenklager auswirkt. Bei einer entsprechenden Konstitution der Kuh muß beim Schwenken der Ansetzvorrichtung damit gerechnet werden, daß Teile der Ansetzvorrichtung die Kuh streifen, was sich nachteilig auf das Melkergebnis auswirken kann. Außerdem muß für jeden einzelnen Melkstand eine besondere Ansetzvorrichtung zur Verfügung stehen, so daß der konstruktive Aufwand für mehrere Melkstände relativ hoch ist. Dadurch wird die Ausrüstung der Melkstände teuer, so daß der verschwenkbare Hebelarm bzw. Träger einer erfolgreichen Automatisierung des Melkbetriebes im Wege steht.

Aufgabe der vorliegenden Erfindung ist es daher, das Verfahren der einleitend genannten Art so zu verbessern, daß eine exakte Führung jedes Zitzenbechers bis zu den Zitzen ermöglicht wird.

Diese Aufgabe wird erfindungsgemäß dadurch gelöst, daß die Ansetzvorrichtung räumlich mittels jeweils in senkrecht aufeinander stehenden Richtungen verfahrbarer linearer Führungen verschoben wird, wobei die Ansetzvorrichtung an einer quer zur Längsrichtung einer Kuh verlaufenden Führung angeordnet ist, mit deren Ende sie unter die zu melkende Kuh verschoben wird.

Durch gleichzeitiges oder zeitlich aufeinanderfolgendes Verschieben der einzelnen linearen Führungen ist einerseits jede beliebige Stelle unterhalb einer zu melkenden Kuh von der Ansetzvorrichtung erreichbar, andererseits ragt diese nur mit einer Führung unter die Kuh, so daß die Gefahr, daß diese relativ schmale Führung empfindliche Stellen der Kuh berührt sehr gering ist. Zugleich wird damit erreicht, daß alle Antriebselemte der Führungen außerhalb des Bereiches der Kuh verbleiben können, was die Gefahr einer Beschädigung durch die Kuh praktisch ausschließt. Die jeweiligen Verschiebungen der Ansetzvorrichtung bis in unmittelbare Nachbarschaft der jeweils zu melkenden Zitze können relativ schnell vorgenommen werden. Sobald jedoch die Ansetzvorrichtungen in unmittelbare Nachbarschaft der jeweils zu melkenden Zitze gelangt ist, werden die einzelnen Linearbewegungen sehr vorsichtig gesteuert, so daß der Zitzenbecher schonend über die jeweils zu melkende Zitze geschoben werden kann. Das Führungssystem kann so ausgebildet werden, daß es sich entlang mehrerer Melkstände erstreckt, die in einer Reihe hintereinander angeordnet sind. Auf diese Weise kann mit verhältnismäßig geringen Kosten eine Vielzahl von Tieren gemolken werden.

Darüber hinaus ist aus der FR-A-2 408 300 eine Vorrichtung zum Durchführen des Verfahrens bekannt geworden.

Diese Vorrichtung weist erhebliche Nachteile auf. Der die Ansetzvorrichtung tragende Träger muß raumgreifend mit seinen Antriebselementen zur horizontalen Führung unter die Kuh geschwenkt werden. Dadurch muß im Hinblick auf die auszuführende Schwenkbewegung damit gerechnet werden, daß empfindliche Teile der Kuh von der Ansetzvorrichtung berührt werden, so daß die Kuh unruhig wird. Ein Auffinden der zu melkenden Zitzen ist damit weitgehend ausgeschlossen. Durch die hohe mechanische Belastung des Schwenkgelenkes ist dies zudem äußerst störanfällig.

Weitere Aufgabe der vorliegenden Erfindung ist es daher, die Vorrichtung der oben genannten Art dadurch zu verbessern, daß sie mit einfachen und billigen Mitteln eine genaue Führung eines an eine Zitze anzusetzenden Zitzenbechers ermöglicht.

Diese Aufgabe wird dadurch gelöst, daß drei Achsen als räumliche Linearkomponenten jeweils rechtwinklig und gegeneinander verschieblich angeordnet sind, von denen eine als verfahrbare Führung ausgebildet ist, an derem Ende die Ansetzvorrichtung zum Verfahren quer zur Längsachse einer Kuh bis in unmittelbare Nähe ihrer zu melkenden Zitze befestigt ist.

Ein derartiges lineares Achsensystem mit gegeneinander verschieblichen Führungen erlaubt eine sehr exakte Steuerung des Zitzenbechers in dem Bereich der zu melkenden Zitze. Der Zitzenbecher kann ohne wesentliche Beeinträchtigungen der Kuh auf kürzestem Wege unter die Kuh und schonend und mit gleichmäßigen Bewegungen über die Zitze geschoben werden. Die einzelnen Linearkomponenten können mechanisch robust ausgeführt werden, und alle empfindlichen Antriebselemente können außerhalb des Einflußbereiches der Kuh angeordnet sein, so daß die Ansetzvorrichtung auch vor Beschädigungen durch die Kuh geschützt ist. Die einzelnen Führungen können sehr genau gegeneinander in relativ einfach gestalteten Verschiebelagern gelagert werden. Auf diese Weise gelingt eine schonende Anpassung der Ansetzvorrichtung an das Tier.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:
- Fig. 1:: eine perspektivische Darstellung eines Melkstandes,
- Fig. 2:: eine Ausschnittsvergrößerung von einer perspektivischen Darstellung eines anderen Melkstandes,
- Fig. 3:: eine Draufsicht auf den Melkstand
- Fig. 4:: einen Querschnitt durch einen Melkstand gemäß der Schnittlinie IV-IV in Fig. 3,
- Fig. 5:: eine perspektivische Darstellung eines Linearsystems,
- Fig. 6:: eine andere perspektivische Darstellung eines Linearsystems mit Feinantrieb,
- Fig. 7:: eine perspektivische Darstellung eines Rahmens zur Auffindung der Zitzenposition,
- Fig. 8:: eine Seitenansicht des Hinterteils einer Kuh mit einer in Richtung auf ein Euter ausgerichteten Lichtleiste,
- Fig. 9:: eine Draufsicht auf ein Euter einer Kuh
- Fig. 10:: eine Draufsicht unter eine Euter einer Kuh mit seitlich positionierter Lichtquelle und
- Fig. 11:: einen Querschnitt durch eine als Kastenprofil ausgebildete Führung.

Das erfindungsgemäße Verfahren läßt sich zweckmäßiger Weise in einem Melkstand (1) durchführen, auf dem eine Kuh (2) zum Zwecke des Melkens steht, deren Euter (3) in Richtung auf einen Stallboden (4) ausgerichtete Zitzen (5, 6, 7, 8) aufweist. Die Zitzen (5, 6) sind den Hinterbeinen (9, 10) der Kuh (2) benachbart, während die Zitzen (7, 8) den Vorderbeinen der Kuh (2) zugewandt sind. Sie ragen aus einem Vorderteil (13) des Euters (3) heraus.

Entlang einer Längsseite (14) des Melkstandes (1) ist ein Führungssystem (15) in lotrechter Richtung oberhalb des Stallbodens (4) aufgebaut. Dieses Führungssystem (15) besteht im wesentlichen aus Führungen (16, 17, 18), die als Metallprofile, beispielsweise Aluminiumprofile, ausgebildet sein können. Die einzelnen Führungen (16, 17, 18) verlaufen im wesentlichen rechtwinklig zueinander. Dabei erstreckt sich die Führung (16) im wesentlichen parallel zur Längsseite (14) des Melkstandes (1), während die Führung (17) senkrecht dazu verläuft und sich von der Führung (16) in Richtung auf das Euter (3) erstreckt. Die Führung (18) verläuft im wesentlichen lotrecht und ist senkrecht zu den Richtungen der Führungen (16, 17) angeordnet. Die einzelnen Führungen (16, 17) sind in Lagern (19. 20) verschieblich gegeneinander gelagert. Diese Lager (19, 20) können in der Weise ausgebildet sein, daß in der einen Führung (16, 17, 18) ein flexibler Kraftübertrager in Richtung der jeweiligen Führung (16, 17, 18) verschieblich gelagert ist, an dem die jeweils andere Führung (18, 17, 16) befestigt ist. Als flexibler Kraftübertrager kommt insbesondere ein von einem entsprechenden Zahnrad (125) angetriebener Zahnriemen (126) in Betracht, der eine Mitnehmerplatte (126) trägt, an der die andere Führung (18, 17, 16) befestigt ist. Zweckmäßigerweise wird dieser Zahnriemen (126) im Inneren der als Kastenprofil (128) ausgebildeten Führung (16, 17, 18) gelagert. Zu diesem Zweck sind innerhalb des Kastenprofils (128) an dessen jeweiligen Enden die Zahnräder (125) drehbar gelagert, auf denen der Zahnriemen (126) umgelenkt wird. Auf der Mitnehmerplatte (127), die sich mit dem Zahnriemen (126) innerhalb des Kastenprofils (128) bewegt, ist eine Mitnehmerkupplung (129) befestigt, die einen sich in Längsrichtung durch das Kastenprofil (128) erstreckenden Schlitz (130) durchdringt, so daß außerhalb des Kastenprofils (128) mit der Mitnehmerkupplung (129) die andere Führung (18, 17, 16) verbunden werden kann. Dabei ist der Zahnriemen (126) so fest vorgespannt, daß eine exakte Steuerung der Führung (18, 17, 16) gegenüber der Führung (16, 17, 18) möglich ist. Darüber hinaus besitzt jede der Führungen (16, 17, 18) mindestens jeweils einen Antrieb (21 22, 23), mit dessen Hilfe die jeweils dem Antrieb zugeordneten Führungen (16, 17, 18) gegenüber den auf ihr gleitend gelagerten Führungen (18, 17, 16) verschoben werden kann. Auf diese Weise ist es denkbar, die Führungen (17, 18) entlang der Längsseite (14) des Melkstandes (1) auf der Führung (16) zu verschieben.

Andererseits kann die Führung (17) bezüglich der der Führung (18) mehr oder minder weit in Richtung auf den Melkstand (1) verschoben werden. Durch entsprechende Kombination der Einzelbewegungen kann ein in Richtung auf die Kuh (2) weisendes Ende (24) der Führung (17) einen oberhalb des Stallbodens (4) liegenden Raum (25) an jedem Punkt bestreichen, der innerhalb des Bewegungsspielraumes der Führungen (16, 17, 18) liegt.

Eine Ansetzvorrichtung (131), die von den Führungen (16, 17, 18) verschoben wird, besteht im wesentlichen aus einem Steg (26), einem Stegende (27), einer Abkröpfung (28) mit deren Ende (29) und einem Greifer (30).

Am Ende (24) ist die Führung (17) in Richtung auf die Hinterbeine (9, 10) der Kuh (2) durch den Steg (26) L-förmig abgewinkelt. Dieser Steg (26) kann gegenüber der mit ihm verbundenen Führung (17) schwenkbar gelagert sein. Der Steg (26) trägt an seinem dem Ende (24) abgewandten Stegende (27) die Abkröpfung (28), die im wesentlichen in eine vom Stallboden (4) abgewandte lotrechtte Richtung nach oben weist. Diese Abkröpfung (28) ist an ihrem dem Steg (26) abgewandten oberen Ende (29) mit dem Greifer (30) versehen, der zwei aufeinanderzu bewegliche Greiferhälften (31, 32) besitzt. Diese beiden Greiferhälften (31, 32) umschließen einen Innenraum (33), in dem durch eine entsprechende Bewegung der Greiferhälften (31, 32) ein Zitzenbecher (59) gehaltert werden kann. Dieser Zitzenbecher (59) wird mit Hilfe einer Steuerung auf eine der Zitzen (5, 6, 7, 8) aufgesetzt. Diese Steuerung geht aus von den Sensoren (49, 50), die in einem Rahmen (34) angeordnet sind. Dieser Rahmen (34) umspannt einen Innenraum (44), in dem die Sensoren (49, 50) ausgerichtet sind.

Die Größe des Innenraums (44) ist derart ausgelegt, daß zwei einander parallel verlaufende Schenkel (41, 42), die den Rahmen (34) seitlich begrenzen, über eine der Zitzen (5, 6, 7, 8) geschoben werden können. Die Schenkel (41, 42) sind an jeweils einem ihrer Enden durch ein Joch (38) miteinander verbunden. Es bildet mit den Schenkeln (41, 42) ein U-Profil (43).

In den Schenkeln (41,42) sind in Richtung auf den Innenraum (44) ausgerichtete Sensoren (49,5o) befestigt. Dabei können die Sensoren (49) als Infrarotstrahler ausgebildet sein, deren Strahlen auf die Sensoren (5o) ausgerichtet sind, die als infrarotempfindliche Fotowiderstände ausgebildet sein können. Die Verteilung der Sensoren (49,5o) innerhalb der Schenkel (41,42) kann in der Weise vorgenommen werden, daß in einem Mittelteil der jeweiligen Schenkel (41,42) die Sensoren (49,5o) in einer dichten Reihenfolge (51) verteilt sind, während in Richtung auf die jeweils einander gegenüberliegende Enden (52,53) der Schenkel (41,42) die Sensoren (49,5o) in einer weniger dichten Verteilung angeordnet sind.

Um zu gewährleisten, daß der Rahmen (34) etwa mittig über eine Zitze (5,6,7,8) geschoben wird, ist im Joch (38) mindestens ein zusätzlicher Sensor (54) vorgesehen, der einen in Richtung auf den Innenraum ausgerichteten Ausgang (55) aufweist. Dieser Sensor (54) kann als ein Ultraschallgeber ausgebildet sein. Dieser legt jeweils die Entfernung zu der Zitze (5,6,7,89 fest, auf die der Rahmen (34) geschoben wird. Darüber hinaus zentriert der Sensor (54) den Rahmen (34) bezüglich der Zitze (5,6,7,8).

Der Rahmen (34) ist am Greifer (3o) über einen Koppelsteg (35) befestigt, so daß er gegenüber diesem eine feste Zuordnung aufweist. Diese Zuordnung ist so bemessen, daß ein von dem Greifer (3o) gehaltener Zitzenbecher (49) mit seinem der Zitze (5,6,7,8) zugewandten oberen Ende (9o) unmittelbar unterhalb des Rahmens (34) angeordnet ist. Auf diese Weise besteht eine feste Zuordnung zwischen dem Rahmen (34) einerseits und dem oberen Ende (91) andererseits. Aufgrund dieser Zuordnung kann der von dem Greifer (3o) ergriffene Zitzenbecher (49) über die Zitze (5,6,7,8) abtastende Sensoren (49,5o,54) in eine sich lotrecht unterhalb der Zitze (5,6,7,8) erstreckende Ebene gesteuert und anschließend durch eine Vertikalbewegung über die Zitze (5,6,7,8) geschoben werden.

Nachdem der Zitzenbecher (59,6o) an die jeweilige Zitze (5,6) angesetzt worden ist, kann der Greifer (3o) und mit ihm der Rahmen (34) vom Zitzenbecher (59) gelöst werden, so daß mit Hilfe des Rahmens (34) andere Zitzenbecher an die jeweiligen Zitzen (7,8) angesetzt werden können. Bei Lösen des Greifers (3o) und des Rahmens (34) können wegen der U-förmigen Ausbildung des Rahmens (34) jegliche Bewegungen der Schenkel (41,42) gegeneinander vermieden werden.

Statt der in zwei Richtungen strahlenden Sensoren (49,5o,54) können auch weitere Sensoren im Rahmen (34) angeordnet sein, die so ausgerichtet sind, daß deren Strahlen sich in einem gemeinsamen Schnittpunkt treffen.

Nachdem der Greifer (3o) von dem angesetzten Zitzenbecher (59) gelöst worden ist, steht er zum Ansetzen weiterer Zitzenbecher (6o) zur Verfügung. Falls diese an die Zitzen einer anderen Kuh angesetzt werden müssen, wird der Greifer (3o) mit Hilfe des Führungssystems (15) aus dem Bereich der einen Kuh (2) herausgefahren und steht nunmehr zur Verfügung, um eine auf einem anderen Melkstand (66,67) stehende andere Kuh (68,69) zu melken.

Zum Zwecke des Melkens sind jeweils vier Melkbecher (59,6o) zu einem Melkzeug (7o) zusammengefaßt, das über eine Milchleitung (71) mit einem Milchbehälter (72) in Verbindung steht. In diesem Milchbehälter (72) wird von einer Vakuumpumpe (73) ein zum Melken notwendiges Vakuum erzeugt, das über die Milchleitung (71) in den einzelnen Zitzenbechern (59,6o) wirkt. Mit Hilfe dieses Vakuum wird den Zitzen (5,6,7,8) die Milch entzogen und in den Milchbehälter (72) transportiert. Ein zum Melken notwendiger Takt zwischen Unterdruck einerseits und Atmosphärendruck andererseits wird von einem Pulsgeber (74) erzeugt, der über eine Pulsleitung (75) einen jeweils gewünschten Melktakt in die Zitzenbecher (59,6o) einsteuert. Zu diesem Zwecke wird der Pulsgeber (74) einerseits mit dem von der Vakuumpumpe (73) erzeugten Unterdruck und andererseits mit Atmosphärendruck verbunden. Die Vakuumpumpe (73) wird im Regelfall von einem Elektromotor (76) angetrieben.

Nachdem eine Kuh (2) den Melkstand betreten hat, werden die einzelnen Führungen (16,17,18) in Richtung auf das Euter (3) so verfahren, daß der Greifer (3o) in Längsrichtung der Kuh (2) von deren Vorderbeinen (11,12) in Richtung auf die Hinterbeine (9,1o) verfahren werden kann. Dabei werden die Signale zur Steuerung der jeweils erforderlichen Bewegungen, die von den Führungen (16,17,18) auszuführen sind, von den Sensoren (49,5o,54) abgegeben. Sobald jeweils eine Zitze (5,6,7,8) von einem Zitzenbecher (59,6o) aufgenommen worden ist, wird der zum Melken notwendige Unterdruck in die Zitzenbecher (59,6o) eingeleitet. Zu diesem Zwecke ist die Steuerung des Führungssystems (15) einerseits und einer sich aus dem Milchbehälter (72), der Vakuumpumpe (73) und dem Pulsgeber (74) zusammensetzenden Melkmaschine (77) andererseits über eine gemeinsame Steuereinheit (78) elektrisch miteinander verbunden. Auf diese Weise ist dafür gesorgt, daß nach Ansetzen der Zitzenbecher (59,6o) ein Steuerimpuls an die Steuereinheit (78) abgegeben werden kann, die ihrerseits die Melkmaschine (77) einschaltet.

Die Steuereinheit (78) erhält Steuerimpulse nicht nur von den Sensoren (49,5o,54) sondern auch von einer Kuhkennung (79), die die Kuh (2) beispielsweise an einem Halsband (8o) trägt. Diese Kuhkennung (79) enthält eine Zuordnung der von ihr gekennzeichneten Kuh (2) zu bestimmten Daten eines Datenspeichers, beispielsweise deren Länge, Milchleistung sowie Fütterungsbedarf. Darüber hinaus kann dieser Datenspeicher aber auch Daten enthalten, die sich auf die anatomische Beschaffenheit des Euters (3) und der Zitzen (5,6,7) beziehen. Beispielsweise ist es möglich, zu einer bestimmten Kuhkennung (79) in der Steuereinheit (78) Daten vorzuhalten, die sich auf den Umfang des Euters (3), Länge und Lage der Zitzen (5,6,7,8) und deren Entfernung vom Stallboden (4) beziehen. Auf diese Weise ist es möglich, das Führungssystems (15) aufgrund der gespeicherten Daten so zu steuern, daß je nach der vorgegebenen Kuhkennung (79) das Melkzeug (7o) in unmittelbare Nähe des Euters (3) gesteuert wird, so daß lediglich eine Feinjustierung aufgrund der von den Sensoren (49,5o,54) abgegebenen Steuerimpulse notwendig ist. Die in der Steuereinheit (78) gespeicherten Daten können bei jedem einzelnen Melkvorgang überprüft und den jeweils vom Führungssystem (15) vorgefundenen Gegebenheiten angepaßt werden. Zu diesem Zwecke werden in die Steuereinheit (78) veränderte Abmessungen des Euters (3), der Zitzen (5,6,7,8) und der jeweils vorhandenen Zuordnung ständig korrigiert und den vorgefundenen Verhältnissen angepaßt.

Eine mechanische Verstärkung des Führungssystems (15) ist dadurch möglich, daß mindestens einige der Führungen (16,17,18) mehrfach ausgeführt werden. Beispielsweise empfiehlt es sich, die in Längsrichtung des Melkstandes (1) verlaufenden Führung (16) durch eine Parallelführung (81) zu verstärken, die beispielsweise in unmittelbarer Nachbarschaft des Stallbodens (4) vorgesehen wird. Darüber hinaus kann auch die in vertikaler Richtung verlaufende Führung (18) durch eine Parallelführung (82) verstärkt werden, die im Abstand der Führung (16) vorgesehen ist, so daß diese sich zwischen den beiden Führungen (18,82) erstreckt.

Darüber hinaus ist es möglich, die Zitzenbecher (59,6o) unmittelbar von dem Greifer (3o) erfassen zu lassen. In diesem Falle muß eine Feinsteuerung mit Hilfe von Sensoren (83,84) erfolgen, die jeweils an einander gegenüberliegenden Enden (85,86) eines Mitnehmerwagens (87) befestigt und in Richtung auf eine zwischen den Enden (85,86) stehende Kuh (2) ausgerichtet sind. Außerdem können Sensoren direkt am Arbeitsorgan (Greifer 3o) oder dem L-förmigen Steg (26) befestigt sein. Der Mitnehmerwagen (87) überspannt die auf dem Melkstand (1) stehende Kuh, die Sensoren (83,84) ragen an Halterungen (88,89) an beiden Seiten der Kuh (2) in Richtung auf den Stallboden (4) soweit herab, daß die Sensoren (83,84) in Richtung auf das Euter (3) ausgerichtet werden können. Sobald das Euter (3) im Strahlengang (9o) der Sensoren (83,84) erscheint, werden die Führungen (16,17,18) entsprechend der von den Sensoren (83,84) aufgefundenen Lage des Euters (3) so gesteuert, daß ein von dem Greifer (3o) ergriffener Zitzenbecher (91) unmittelbar auf eine der Zitzen (5,6,7,8) aufgesetzt werden kann. Dabei wird die Steuerung des Greifers (3o) so vorgenommen, daß zunächst auf die hinteren Zitzen (5,6) jeweils ein Zitzenbecher (59,6o) aufgesetzt wird. Sodann werden weitere Zitzenbecher (59,6o) auf die vorderen Zitzen (7,8) aufgesetzt. Auf diese Weise wird verhindert, daß die mit den Zitzenbechern (59,6o) verbundenen Milchleitungen (71) beim Ansetzen der Zitzenbecher (59,6o) sich gegenseitig verdrillen.

Um eine Möglichkeit für den Greifer (3o) zu schaffen, einzelne Zitzenbecher (91,92,93,94) so zu ergreifen, daß sie problemlos auf die Zitzen (5,6,7,8) angesetzt werden können, sind die Zitzenbecher (91,92,93,94) in einer Haltevorrichtung (95) eingesetzt, in der für jeden einzelnen Zitzenbecher (91,92,93,94) eine Halterung (96,97,98,99) vorgesehen ist. Die Halterung (96,97,98,99) kann in der Weise beschaffen sein, daß sich durch die Haltevorrichtung (95) eine Bohrung erstreckt, deren Querschnitt in etwa einem äußeren Durchmesser der Zitzenbecher (91,92,93,94) entspricht. In diese Halterungen (96,97,98,99) ragen die Zitzenbecher (91,92,93,94) mit ihren Milchschläuchen (1oo) zugewandten Enden (1o1) hinein und liegen jeweils mit einem Bund (1o2) auf der Halterungvorrichtung (95) auf. Zwischen dem Bund (1o2) und einem der jeweiligen Zitze (5,6,7,8) zugewandten oberen Ende (1o3) des Zitzenbechers (91,92,93,94) liegt ein oberer Teil einer den Innenraum (65) umgebenden Zitzenbecherwandung (1o4), der von dem Greifer (3o) ergriffen werden kann.

Nachdem der Greifer (3o) den Zitzenbecher (91,92,93,94) im Bereich des oberen Teils (1o4) ergriffen hat, zieht er ihn aus der Haltevorrichtung (95) heraus und bewegt ihn in Richtung auf die Zitzen (5,6,7,8). Dabei zieht er den Milchschlauch (1oo), der den Zitzenbecher (91,92,93,94) mit einem nicht dargestellten Sammelstück verbindet, hinter sich her, so daß sich der Milchschlauch (11o) durch die als Bohrungen ausgebildeten Halterung (96,97,98,99) erstreckt. Darüber hinaus erstreckt sich durch diese Halterungen (96,97,98,99) eine Kordel (1o5), die den Zitzenbecher (91,92,93,94) mit einer nicht dargestellten Abnahmeautomatik verbindet. Diese Abnahmeautomatik wird nach Beendigung des Melkvorganges von der Steuereinheit (78) angesteuert und zieht daraufhin über die Kordel (1o5) den Zitzenbecher (91,92,93,94) von der gemolkenen Zitze (5,6,7,8) ab. Eine möglichst nahe Aufstellung der Haltevorrichtung (95) im Bereich der zu melkenden Kuh (2) sorgt dafür, daß die Kordel (1o5) den von der Zitze (5,6,7,8) abgezogenen Zitzenbecher (91,92,93,94) wieder in die für ihn vorgesehene Halterung (96,97,98,98) zurückzieht.

Mit der Haltervorrichtung (95) kann ein nicht dargestellter Spülautomat verbunden sein, der dazu dient, die Zitzenbecher (91,92,93,94) und das mit diesen verbundene milchableitende System mit Hilfe einer Spülvorrichtung zu spülen. Dieser Spülautomat wird mit Hilfe einer Ankoppelvorrichtung (1o6) über eine Spülmittelleitung (1o7) an die einzelnen Zitzenbecher (91,92,93,94) angekoppelt. Diese Ankoppelvorrichtung besteht im wesentlichen aus einem an der Haltevorrichtung (92) schwenkbar angelenkten Spülarm, in dem halbrunde Ausnehmungen (1o7,1o8,1o9,11o) zur Aufnahme der oberen Enden (1o3) jeweils eines Zitzenbechers (91,92,93,94) vorgesehen sind. Diese Ausnehmungen (1o7) sind innerhalb der Ankoppelvorrichtung (1o6) über Spülmittelkanäle (111) miteinander verbunden. Beim Verschwenken der Ankoppelvorrichtung (1o6) in Richtung auf die Haltevorrichtung (95) ragen die oberen Enden (1o3) in die Ausnehmungen (1o7,1o8,1o9,11o) hinein und schließen diese flüssigkeitsdicht ab. Nunmehr kann die Spülflüssigkeit durch den Spülmittelkanal (111) in die Ausnehmungen (1o7,1o8,1o9,11o) gepumpt werden. Die in die Zitzenbecher (91,92,93,94) eintretende Spülflüssigkeit durchfließt deren Innenraum (65) und wird über die Milchschläuche (1oo) in das milchableitende System abgeleitet. Durch einen ständigen Kreislauf zwischen dem Spülautomaten einerseits und dem vom Spülmittel durchflossenen milchableitenden System andererseits wird eine intensive Spülung des gesamten milchableitenden Systems herbeigeführt.

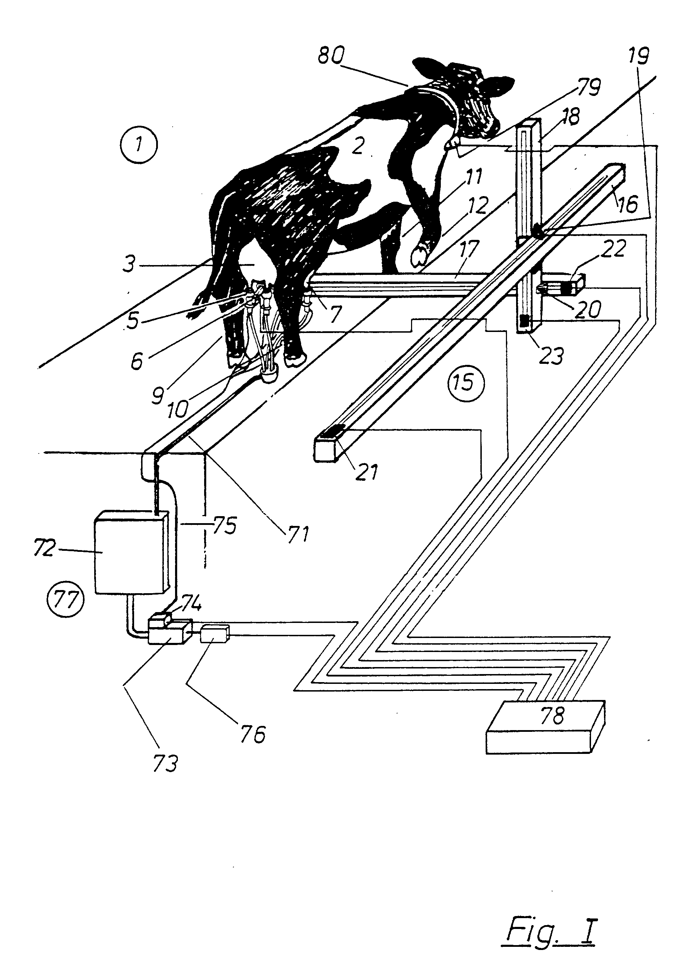

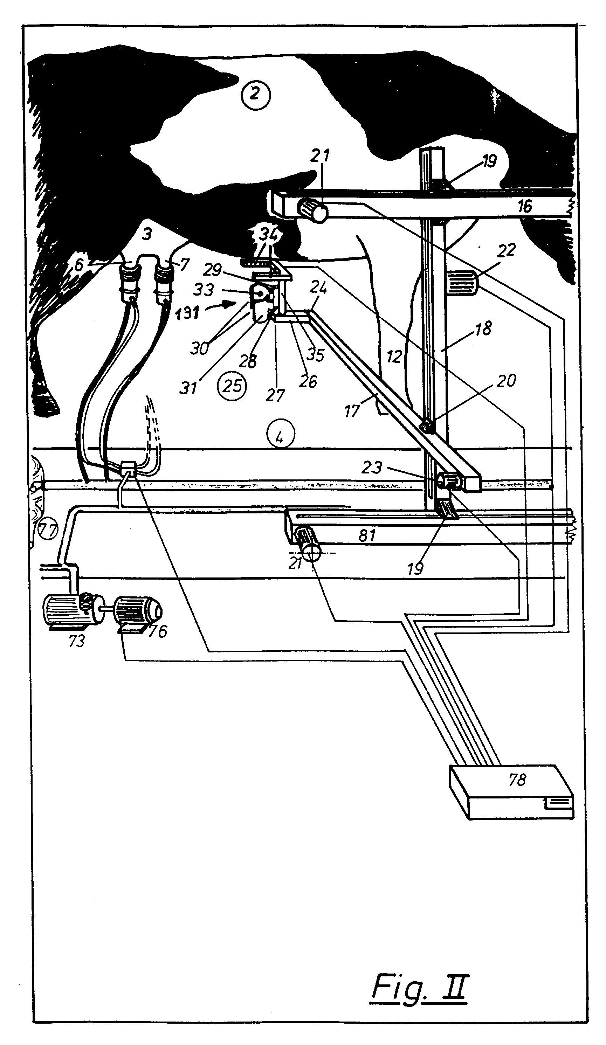

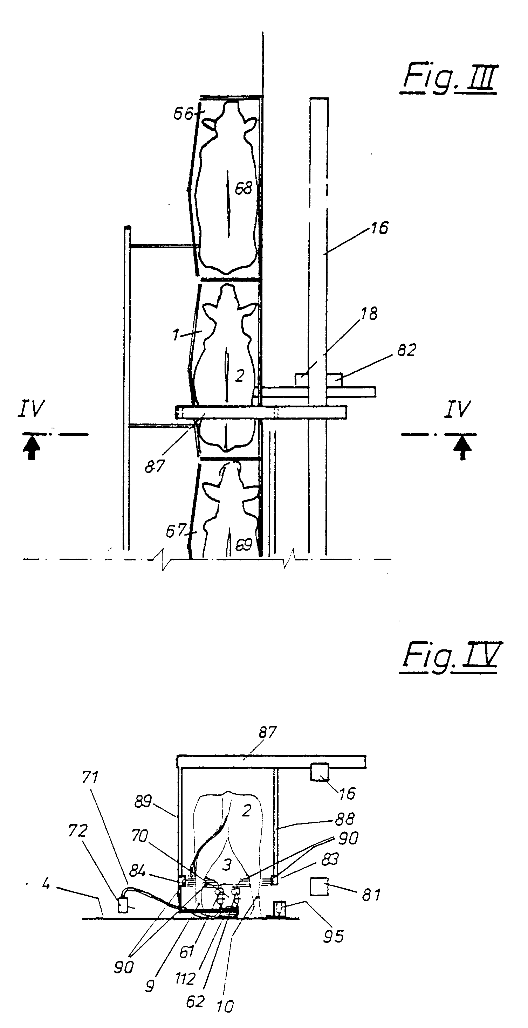

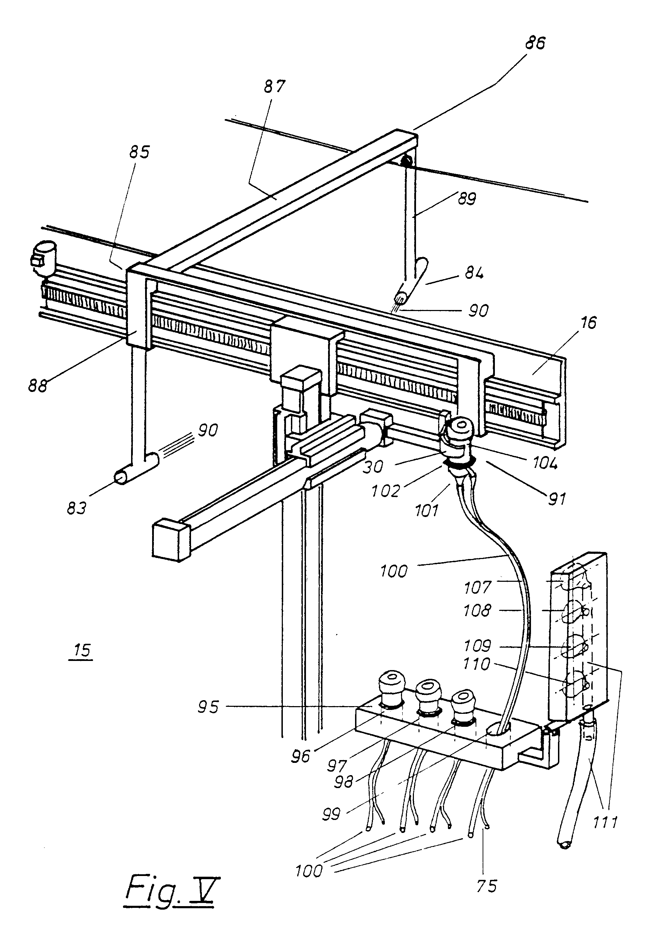

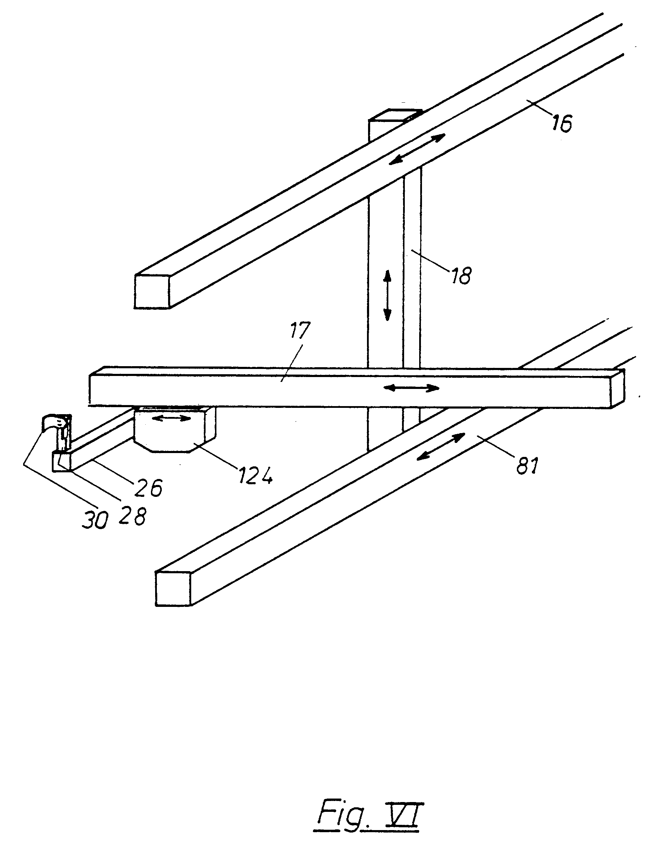

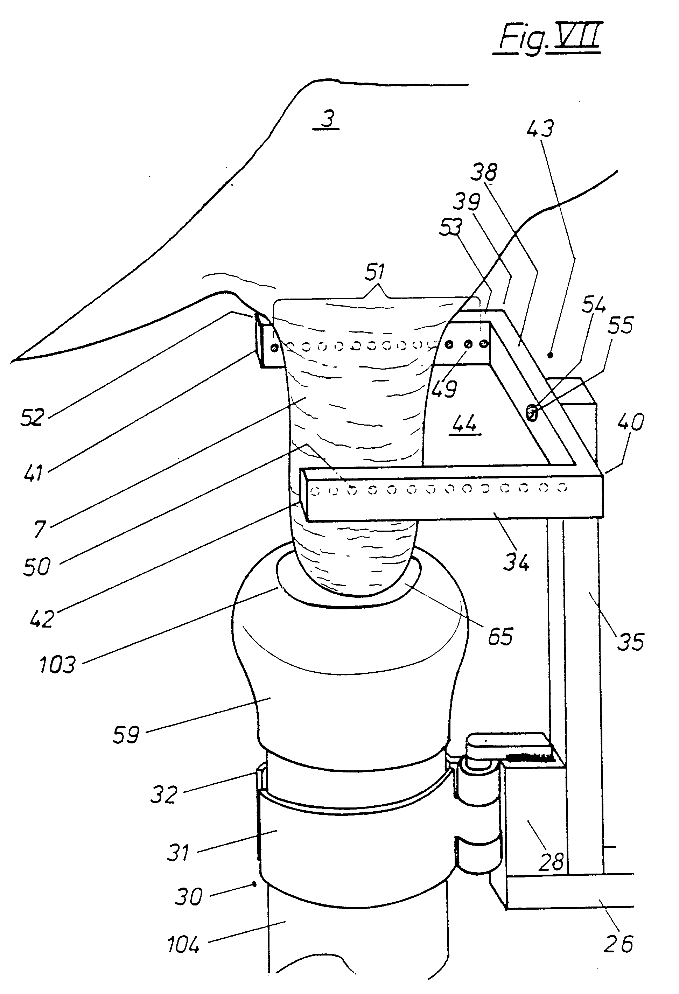

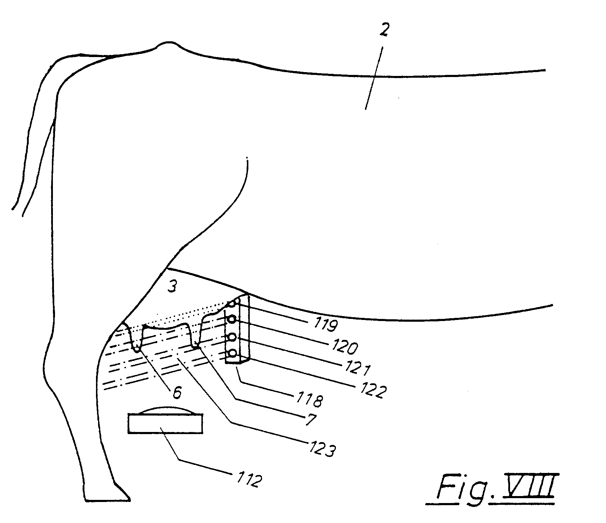

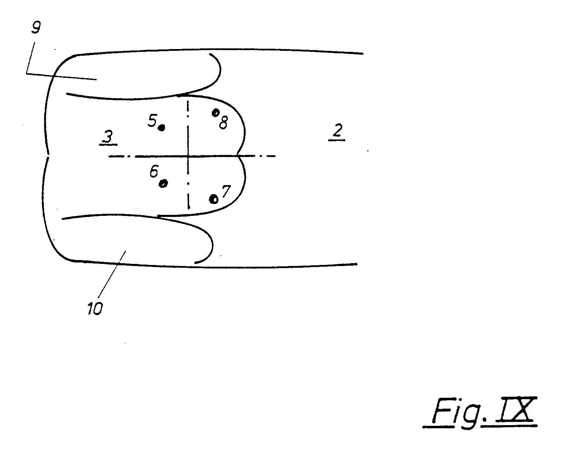

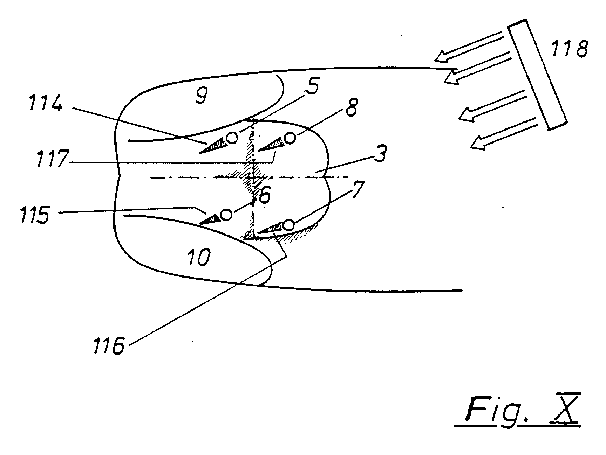

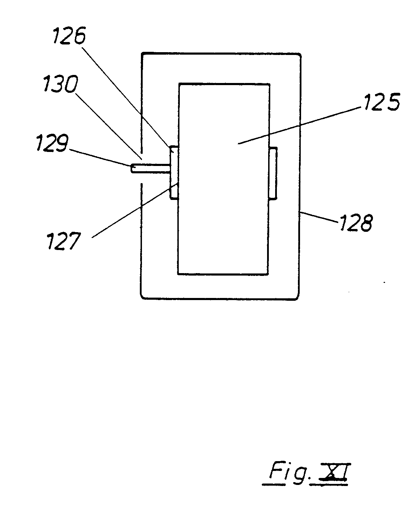

Eine Auffindung der Zitzen (5,6,7,8) ist auch mit Hilfe optischer Sensoren möglich. Insbesondere kann eine Kamera (112) oder eine Optik, die über entsprechende Leitungen mit einer Kamera (112) verbunden ist, zwischen dem Stallboden (4) und dem Euter (3) installiert werden. Vorzugsweise bietet sich eine Befestigung an dem L-förmigen Steg (26) in der Form an, daß die Optik senkrecht nach oben gerichtet ist. Auf diese Weise wird in der Kamera (112) ein Bild des Euters (3) erzeugt, das demjenigen der Figur 9 entspricht. Dabei befindet sich die Kamera (112) mittig unterhalb des Euters (3). Diese Justierung der Kamera (112) orientiert sich an den Zitzen (5,6,7,8), die wegen ihrer runden Form relativ leicht zu erkennen ist. Verbessert wird die Möglichkeit der Zitzenerkennung noch dadurch, daß das Euter ((3) von einer gerichteten Beleuchtung (113) (vergl. Figur 1o) angestahlt wird. Auf diese Weise bilden sich an den vier Zitzen (5,6,7,8) je eine der gerichteten Beleuchtung (113) entsprechender Schatten (114,115,116,117). Anhand dieser charakteristischen Schattenkombination sind die Zitzen (5,6,7,8) sehr leicht von der Kamera (112) zu erkennen.

Aufgrund des von der Kamera (112) aufgenommenen Bildes kann eine Zuordnung der Zitzen (5,6,7,8) sowohl in ihrer Lage zueinander als auch bezüglich des Euters (3) gut vorgenommen werden. Schwierigkeiten kann lediglich die Bestimmung der Höhe machen, in der sich die Zitzen (5,6,7,8) oberhalb des Stallbodens (4) befinden. Zu diesem Zwecke sind zwei Möglichkeiten denkbar, die beide benutzt werden können. Einerseits kann das Objektiv oder die Kamera (112) auf einen bestimmten Punkt der Zitze (5,6,7,8) scharf eingestellt werden. Der Betrag, um den das Objektiv der Kamera (112) verstellt werden muß, damit die Zitzen (5,6,7,8) scharf abgebildet werden, ist ein Maß für den Abstand, den die Zitzen (5,6,7,8) vom Stallboden (4) einhalten. Andererseits ist es jedoch auch möglich, die Kamera (112) auf einem unterhalb des Euters (3) vorgesehenen Niveau auf eine vorgegebene Höhe scharf einzustellen. Sollte bei dieser Scharfeinstellung des Objektivs die einzelne Zitze (5,6,7,8) nicht scharf abgebildet sein, so wird die Kamera (112) in Richtung auf das Euter (3) solange bewegt, bis eine Scharfeinstellung der Zitzen (5,6,7,8) herbeigeführt ist. Die zum Zwecke der Scharfeinstellung notwendige Bewegung der Kamera (112) ist ein weiteres Maß für den Abstand der Zitzen (5,6,7,8) vom Stallboden (4).

Darüber hinaus ist es jedoch auch möglich, daß die lotrechte Entfernung vom Stallboden mit Hilfe abstandsmessender Sensoren gemessen wird. Als Sensoren kommen in Betracht Ultraschall- und Lichttaster. Mit Hilfe dieser Mittel können auch Zitzenpositionen noch während des Ansetzvorganges kontrolliert und gegebenenfalls Nachsteuerungen des Greifers vorgenommen werden.

Darüber hinaus kann die Höhe der Zitzen (5,6,7,8) gegenüber dem Stallboden (4) mit Hilfe einer Lichtleiste (118) gemessen werden. Auf dieser Lichtleiste (118) sind in lotrechter Richtung untereinander mehrere Strahler (119,12o, 121,122) befestigt. Je nachdem, von welchem dieser Strahler (119, 12o,121,122) der von diesem ausgehende Strahlengang (123) von den Zitzen (5,6,7,8) abgedeckt wird, können Rückschlüsse über die genaue Positionierung des Euters (3) einerseits und der Zitzen (5,6,7,8) andererseits gezogen werden. Um die Lichtleiste (118) in unmittelbare Nachbarschaft des Euters (3) zu verfahren, kann die Lichtleiste (118) mechanisch mit dem Mitnehmerwagen (87) verbunden werden. Um eine genaue Abbildung der Zitzen (5,6,7,8) durch das von der Lichtleiste (118) ausgestrahlte Licht zu ermöglichen, wird die Lichtleiste (118) mit einer nicht dargestellten Schlitzblende versehen.

In Verbindung mit einer Kamera (112) kann auch ein entsprechend installiertes Spiegelsystem zur Erkennung der jeweiligen Lage des Euters (3) herangezogen werden. Als Lichtquelle fur die Spiegel könnte die Lichtleiste (118) Verwendung finden. Diese Lösung hat den Vorzug, die Kamer (112) aus einem mechanisch gefährdeten Teil herauszuhalten.

Unabhängig davon, ob zur Auffindung der speziellen Lage des Euters (3) alle oder nur einige der Sensoren (49,5o,54,83, 84,112) Verwendung finden, können diese alle mit der Steuereinheit (78) zusammenarbeiten. Eine Positionsbestimmung des Greifers (3o) erfolgt im Falle des elektromechanischen Antriebs der Führungen (16,17,18) durch Inkrementalgeber. Darüber hinaus ist jedoch auch eine Feinjustierung mit Hilfe von pneumatischen oder hydraulischen Antrieben möglich. Aus den von den Sensoren (49,5o,54,83,84,112) ermittelten und an die Steuereinheit (78) übertragenen Signalen werden die Positionen der Zitzen (5,6,7,8) bestimmt und diese mit der Position der Greifers (3o) verglichen. Anschließend erfolgt eine Bewegung des Greifers (3o) an die ermittelte Position der Zitzen (5,6,7,8). Eine Nachjustierung der ermittelten Lage ist dadurch möglich, daß bei aufgesetzten Zitzenbechern (59,6o) die Greifer (3o) gelöst und bezüglich der genauen Lage der Zitzen (5,6,7,8) ausgerichtet werden. Falls dadurch eine Berichtigung der Position der Zitzen (5,6,7,8) erforderlich sein sollte, wird diese statt der in der Steuereinheit (78) bisher eingespeicherten Werte in die Steuereinheit (78) übernommen.

Sollte zwischenzeitlich eine Bewegung der Kuh (2) stattgefunden haben, so wird diese sowohl von den Sensoren (83,84) als auch von der Kamera (112) vermerkt werden. Eine derartige Bewegung der Kuh (2) findet Berücksichtigung bei der Korrektur der in die Steuereinheit (78) aufgenommenen Daten.

Das Führungssystem (15) kann dadurch modifiziert werden, daß an einer oder mehreren Führungen (16,17,18) eine in der gleichen Richtung verlaufende Feinführungseinheit (124) installiert ist. Wenn diese beispielsweise an der Führung (17) in deren Längsrichtung verschieblich gelagert ist, so kann sie bezüglich der Führung (17) Feinjustierungen vornehmen und dadurch den Greifer (3o), der an ihr befestigt ist, sehr genau in Richtung auf das Euter (3) verfahren. Da die Feinführungseinheit (124) gegenüber der Führung (16,17,18), auf der sie jeweils verschieblich gelagert ist, eine relativ geringe Masse aufweist, ist durch eine Verschiebung der Feinführungseinheit (124) eine sehr genaue Lagepositionierung des Greifers (3o) möglich.

## Patentansprüche

1. Verfahren zum maschinellen Ansetzen jeweils eines Zitzenbechers (59, 60) an eine zu melkende Zitze (5, 6, 7, 8), deren Lage durch einen Sensor (49, 50, 54, 83, 84) geortet und mit einer von einer Ansetzvorrichtung (131) jeweils eingenommenen Stellung verglichen wird, die in Richtung auf die Zitze (5, 6, 7, 8) so lange verändert wird, bis die Ansetzvorrichtung (131) den Zitzenbecher (59, 60) über die Zitze (5, 6, 7, 8) geschoben hat, dadurch gekennzeichnet, daß die Ansetzvorrichtung (131) räumlich mittels jeweils in senkrecht aufeinander stehenden Richtungen verfahrbarer linearer Führungen (16, 17, 18) verschoben wird, wobei die Ansetzvorrichtung (131) an einer quer zur Längsrichtung einer Kuh (2) verlaufenden Führung (17) angeordnet ist, mit deren Ende (24) sie unter die zu melkende Kuh (2) verschoben wird.

2. Verfahren nach Anspruch 1, dadurch gekennzeichnet, daß die Ansetzvorrichtung (131) in einer vorgegebenen Reihenfolge der jeweils einzuhaltenden Verschieberichtungen der einzelnen Führungen (16, 17, 18) verschoben wird.

3. Verfahren nach Anspruch 1, dadurch gekennzeichnet, daß die Ansetzvorrichtung (131) je nach einer jeweils von ihr zu vollziehenden Positionsänderung entweder gleichzeitig auf jeweils zwei Führungen (16, 17, 18) oder nur auf einer Führung (16, 17, 18) verfahren wird.

4. Verfahren nach Anspruch 1 bis 3, dadurch gekennzeichnet, daß die Ansetzvorrichtung (131) von einem vorgegebenen Programm gesteuert wird, das für ein zu melkendes Tier in einer Steuereinheit (78) abgespeichert und gegebenenfalls von Daten korrigiert wird, die bei einem Melkvorgang gewonnen werden.

5. Verfahren nach Anspruch 1 bis 4, dadurch gekennzeichnet, daß individuelle Parameter eines zu melkenen Euters (3) von einer Abtastvorrichtung abgetastet werden, die in unmittelbare Nachbarschaft des Euters (3) gefahren wird.

6. Verfahren nach Anspruch 1 bis 5, dadurch gekennzeichnet, daß in horizontaler Richtung entlang eines Euters (3) mindestens ein Sensor (49, 50) geschoben wird, der das Euter (3) durch Strahlen abtastet.

7. Vorrichtung zur Durchführung des Verfahrens der Ansprüche 1 - 6 mit einem Sensor (49, 50, 54, 83, 84) zum Orten der Lage der Zitze (5, 6, 7, 8), einer ortsbeweglichen Ansetsvorrichtung (131) und einer Steuereinheit (78) zur Bestimmung der Lage der Ansetzvorrichtung (131) bezüglich der Zitze (5,6,7,8) und zur Steuerung der Ansetzvorrichtung (131), dadurch gekennzeichnet, daß drei Achsen als räumliche Linearkomponenten jeweils rechtwinklig und gegeneinander verschieblich angeordnet sind, von denen eine als verfahrbare Führung (17) ausgebildet ist, an deren Ende (24) die Ansetzvorrichtung (131) zum Verfahren quer zur Längsachse einer Kuh (2) bis in unmittelbare Nähe ihrer zu melkenden Zitze (5, 6, 7, 8) befestigt ist.

8. Vorrichtung nach Anspruch 7, dadurch gekennzeichnet, daß die Linearkomponenten jeweils einen Antrieb aufweisen, der als drehzahlgesteuerter Drehstrommotor ausgebildet ist.

9. Vorrichtung nach Anspruch 7 und 8, dadurch gekennzeichnet, daß eine erste Führung (16) sich so erstreckt, daß eine zu melkende Kuh (2) mit ihrer Längsachse entlang der ersten Führung (16) ausrichtbar ist.

10. Vorrichtung nach Anspruch 7 bis 9, dadurch gekennzeichnet, daß die erste Führung (16) sich entlang mehrerer Melkstände (1, 66, 67) erstreckt, die in einer Reihe angeordnet sind.

11. Vorrichtung nach Anspruch 10, dadurch gekennzeichnet, daß an der Ansetzvorrichtung (131) ein Arbeitsorgan angeordnet ist.

12. Vorrichtung nach Anspruch 7 bis 11, dadurch gekennzeichnet, daß die Führung (17) an ihrem Ende (24) mit einem L-förmig abgewinkelten Steg (26) versehen ist, an dessen Stegende (27) das Arbeitsorgan befestigt ist.

13. Vorrichtung nach Anspruch 7 bis 12, dadurch gekennzeichnet, daß am Stegende (27) eine nach oben ragende lotrechte Abkröpfung (28) vorgesehen ist.

14. Vorrichtung nach Anspruch 11 bis 13, dadurch gekennzeichnet, daß das Arbeitsorgan als Greifer (30) mit einem pneumatischen Antrieb ausgebildet ist.

15. Vorrichtung nach Anspruch 7 bis 14, dadurch gekennzeichnet, daß auf mindestens einer Führung (16, 17, 18) eine Vorrichtung zur Zitzenfindung vorgesehen ist.

16. Vorrichtung nach Anspruch 15, dadurch gekennzeichnet, daß die Vorrichtung zur Zitzenfindung als ein Mitnehmerwagen (87) ausgebildet ist.

17. Vorrichtung nach Anspruch 15 und 16, dadurch gekennzeichnet, daß der Mitnehmerwagen (87) in einer definierten Position abgekoppelt ist.

18. Vorrichtung nach Anspruch 7 bis 17, dadurch gekennzeichnet, daß die in lotrechter Richtung liegende Führung (18) durch eine Feder unterstützt wird.

19. Vorrichtung nach Anspruch 11 bis 18, dadurch gekennzeichnet, daß das Arbeitsorgan einen Innenraum (33) zur Aufnahme von mindestens einem Zitzenbecher (59, 60) aufweist.

20. Vorrichtung nach Anspruch 11 bis 18, dadurch gekennzeichnet, daß das Arbeitsorgan einen Innenraum (33) zur Aufnahme eines Melkzeuges aufweist.

21. Vorrichtung nach Anspruch 7 bis 20, dadurch gekennzeichnet, daß an jedem Melkstand ( 1, 66, 67) eine Haltevorrichtung (95) für Zitzenbecher (91, 92, 93, 94) vorgesehen ist.

22. Vorrichtung nach Anspruch 21, dadurch gekennzeichnet, daß in der Haltevorrichtung (95) Halterungen (96, 97, 98, 99) vorgesehen sind, in der jeweils ein Zitzenbecher (91, 92, 93, 94) auf einem an seiner äußeren Oberfläche vorgesehenen Bund (102) aufliegt.

23. Vorrichtung nach Anspruch 21 und 22, dadurch gekennzeichnet, daß sich durch die Halterungen (96, 97, 98, 99) jeweils ein Milchschlauch (100) erstreckt, von denen jeder eine Verbindung des Zitzenbechers (91, 92, 93, 94) mit einer Melkmaschine (77) darstellt.

24. Vorrichtung nach Anspruch 21 bis 23, dadurch gekennzeichnet, daß an jedem Zitzenbecher (91, 92, 93, 94) als Verbindung zu einer Abnahmeautomatik Kordeln (105) befestigt sind, die durch die Halterungen (96, 97, 98, 99) verlaufen.

25. Vorrichtung nach Anspruch 21 bis 24, dadurch gekennzeichnet, daß Sensoren zur Überprüfung der exakten Lage der in den Halterungen (96, 97, 98, 99) stehenden Zitzenbecher (91, 92, 93, 94) vorgesehen sind.

26. Vorrichtung nach Anspruch 21 bis 25, dadurch gekennzeichnet, daß eine Ankoppelvorrichtung (106) zur Verbindung der Zitzenbecher (91, 92, 93, 94) mit einem Spülmittelkanal (111) vorgesehen ist.

27. Vorrichtung nach Anspruch 11 ibs 26, dadurch gekennzeichnet, daß in einem das Arbeitsorgan umgebenden Bereich ein Sensorsystem zum Auffinden der Zitzen (5, 6, 7, 8) befestigt ist.

28. Vorrichtung nach Anspruch 27, dadurch gekennzeichnet, daß das Sensorsystem an zwei Schenkeln (41, 42) angeordnet ist, die so ausgerichtet werden können, daß das Euter (3) der zu melkenden Kuh (2) sich zwischen ihnen befindet.

29. Vorrichtung nach Anspruch 28, dadurch gekennzeichnet, daß an den Schenkeln (41, 42) quer zu ihrer Längsrichtung ausgerichtete Sensoren (49, 50) in Richtung auf die vorgesehene Position des Euters (3) ausgerichtet sind.

30. Vorrichtung nach Anspruch 29, dadurch gekennzeichnet, daß die Sensoren (49, 50) als Infrarotsensoren ausgebildet sind.

31. Vorrichtung nach Anspruch 28 bis 30, dadurch gekennzeichnet, daß die Schenkel (41, 42) über ein Joch (38) miteinander verbunden sind, in dem ein parallel zur Längsrichtung der Schenkel (41, 42) ausgerichteter Sensor (54) vorgesehen ist.

32. Vorrichtung nach Anspruch 31, dadurch gekennzeichnet, daß der in Längsrichtung der Schenkel (41, 42) ausgerichtete Sensor (54) ein Ultraschallsensor ist.

33. Vorrichtung nach Anspruch 27 bis 32, dadurch gekennzeichnet, daß in einer Steuereinheit (78) zusätzlich Lagedaten der zu melkenden Kuh (2), des Euters (3) sowie der Zitzen (5, 6, 7, 8) abgespeichert sind.

34. Vorrichtung nach Anspruch 33, dadurch gekennzeichnet, daß in der Steuereinheit (78) Daten eingespeichert sind, die einer manuell eingesteuerten Position der Führungen (16, 17, 18) entsprechen.

35. Vorrichtung nach Anspruch 16 bis 34, dadurch gekennzeichnet, daß am Mitnehmerwagen (87) die Sensoren (83, 84) zur Aufnahme von während eines Aufsetzens von Zitzenbechern (59, 60) stattfindenden Tierbewegungen vorgesehen sind.

36. Vorrichtung nach Anspruch 7 bis 35, dadurch gekennzeichnet, daß das Sensorsystem als Kamera ausgebildet ist.

37. Vorrichtung nach Anspruch 7 bis 35, dadurch gekennzeichnet, daß das Sensorsystem als Optik ausgebildet ist, die über eine Leitung mit einer Kamera verbunden ist.

38. Vorrichtung nach Anspruch 36 und 37, dadurch gekennzeichnet, daß das Sensorsystem einen lotrecht aufwärts in Richtung auf zu positionierende Zitzen (5, 6, 7, 8) gerichteten Strahlengang aufweist.

39. Vorrichtung nach Anspruch 33 bis 38, dadurch gekennzeichnet, daß in der Steuereinheit (78) Daten zur Ansteuerung einer vollautomatischen Melkmaschine (77) abgespeichert sind.

## Claims

1. A method of mechanically fitting a teat cup (59, 60) to a respective teat (5, 6, 7, 8) which is to be milked and the position of which is located by a sensor (49, 50, 54, 83, 84) and compared to a position which is respectively assumed by a fitting device (131) and which is varied in a direction towards the teat (5, 6, 7, 8) until the fitting device (131) has pushed the teat cup (59, 60) over the teat (5, 6, 7, 8), characterised in that the fitting device (131) is spatially displaced by means of linear guides (16, 17, 18) respectively displaceable in mutually perpendicular directions, wherein the fitting device (131) is arranged on a guide (17) which extends transversely to the longitudinal direction of a cow and with the end (24) of which it is pushed into position below the cow (2) to be milked.

2. A method according to claim 1 characterised in that the fitting device (131) is displaced in a predetermined sequence in regard to the respective directions of displacement to be observed in respect of the individual guides (16, 17, 18).

3. A method according to claim 1 characterised in that the fitting device (131), for a respective change in position to be accomplished by same, is displaced either simultaneously on two respective guides (16, 17, 18) or only on one guide (16, 17, 18).

4. A method according to claims 1 to 3 characterised in that the fitting device (131) is controlled by a predetermined program which is stored for an animal to be milked in a control unit (78) and possibly corrected by data which are obtained in a milking operation.

5. A method according to claims 1 to 4 characterised in that individual parameters of an udder (3) to be milked are sensed by a sensing device which is moved into the direct vicinity of the udder (3).

6. A method according to claims 1 to 5 characterised in that at least one sensor (49, 50) is displaced in a horizontal direction along an udder (3), for sensing the udder (3) by beams.

7. Apparatus for carrying out the method according to claims 1 to 6 comprising a sensor (49, 50, 54, 83, 84) for locating the position of the teat (5, 6, 7, 8), a fitting device (131) which is movable in position and a control unit (78) for determining the position of the fitting device (131) with respect to the teat (5, 6, 7, 8) and for controlling the fitting device (131), characterised in that three axes are arranged as spatial linear components respectively displaceably relative to each other and at a right angle, of which one is in the form of a displaceable guide (17), to the end (24) of which is fixed the fitting device (131) for displacement transversely to the longitudinal axis of a cow (2) into the immediate vicinity of its teat (5, 6, 7, 8) to be milked.

8. Apparatus according to claim 7 characterised in that the linear components each have a respective drive which is in the form of a speed-controlled three-phase motor.

9. Apparatus according to claims 7 and 8 characterised in that a first guide (16) extends in such a way that a cow (2) to be milked can be oriented with its longitudinal axis along the first guide (16).

10. Apparatus according to claims 7 to 9 characterised in that the first guide (16) extends along a plurality of milking stands (1, 66, 67) which are arranged in a row.

11. Apparatus according to claim 10 characterised in that a working member is arranged at the fitting device (131).

12. Apparatus according to claims 7 to 11 characterised in that at its end (24) the guide (17) is provided with a limb (26) which is angled in a L-shape and to the end (27) of which is fixed the working member.

13. Apparatus according to claims 7 to 12 characterised in that an upwardly projecting perpendicular angle portion (28) is provided at the limb end (27).

14. Apparatus according to claims 11 to 13 characterised in that the working member is in the form of a gripper (30) with a pneumatic drive.

15. Apparatus according to claims 7 to 14 characterised in that a teat-finding device is provided on at least one guide (16, 17, 18).

16. Apparatus according to claim 15 characterised in that the teat-finding device is in the form of an entrainment carriage (87).

17. Apparatus according to claims 15 and 16 characterised in that the entrainment carriage (87) is uncoupled in a defined position.

18. Apparatus according to claims 7 to 17 characterised in that the guide (18) which is disposed in a perpendicular direction is supported by a spring.

19. Apparatus according to claims 11 to 18 characterised in that the working member has an internal space (33) for receiving at least one teat cup (59, 60).

20. Apparatus according to claims 11 to 18 characterised in that the working member has an internal space (33) for receiving a milking implement.

21. Apparatus according to claims 7 to 20 characterised in that a holding device (95) for teat cups (91, 92, 93, 94) is provided at each milking stand (1, 66, 67).

22. Apparatus according to claim 21 characterised in that provided in the holding device (95) are holders (96, 97, 98, 99) in which a respective teat cup (91, 92, 93, 94) lies on a collar (102) provided at its outside surface.

23. Apparatus according to claims 21 and 22 characterised in that a respective milk hose (100) extends through each of the holders (96, 97, 98, 99), each of the hoses representing a communication for the teat cup (91, 92, 93, 94) to a milking machine (77).

24. Apparatus according to claims 21 to 23 characterised in that fixed to each teat cup (91, 92, 93, 94) as a connection to an automatic removal means are cords (105) which extend through the holders (96, 97, 98, 99).

25. Apparatus according to claims 21 to 24 characterised in that there are provided sensors for checking the exact position of the teat cups (91, 92, 93, 94) disposed in the holders (96, 97, 98, 99).

26. Apparatus according to claims 21 to 25 characterised in that there is provided a coupling means (106) for connecting the teat cups (91, 92, 93, 94) to a flushing agent duct (111).

27. Apparatus according to claims 11 to 26 characterised in that a sensor system for discovering the teats (5, 6, 7, 8) is fixed in a region surrounding the working member.

28. Apparatus according to claim 27 characterised in that the sensor system is arranged on two legs (41, 42) which can be so oriented that the udder (3) of the cow (2) to be milked is disposed between them.

29. Apparatus according to claim 28 characterised in that sensors (49, 50) which are oriented on the legs (41, 42) transversely to their longitudinal direction are directed towards the intended position of the udder (3).

30. Apparatus according to claim 29 characterised in that the sensors (49, 50) are in the form of infra-red sensors.

31. Apparatus according to claims 28 to 30 characterised in that the legs (41, 42) are connected together by way of a yoke (38) in which there is provided a sensor (54) which is oriented parallel to the longitudinal direction of the legs (41, 42).

32. Apparatus according to claim 31 characterised in that the sensor (54) which is oriented in the longitudinal direction of the legs (41, 42) is an ultrasound sensor.

33. Apparatus according to claims 27 to 32 characterised in that positional data in respect of the cow (2) to be milked, the udder (3) and the teats (5, 6, 7, 8) are stored in a control unit (78).

34. Apparatus according to claim 33 characterised in that stored in the control unit (78) are data which correspond to a manually set position of the guides (16, 17, 18).

35. Apparatus according to claims 16 to 34 characterized in that the sensors (83, 84) for detecting animal movements which occur during an operation of fitting teat cups (59, 60) are provided on the entrainment carriage (87).

36. Apparatus according to claims 7 to 35 characterised in that the sensor system is in the form of a camera.

37. Apparatus according to claims 7 to 35 characterised in that the sensor system is in the form of an optical means which is connected to a camera by way of a line.

38. Apparatus according to claims 36 and 37 characterised in that the sensor system has a beam path which is directed perpendicularly upwardly towards teats (5, 6, 7, 8) to be positioned.

39. Apparatus according to claims 33 to 38 characterised in that data for actuation of a fully automatic milking machine (77) are stored in the control unit (78).

## Revendications

1. Procédé pour la mise en place mécanique d'un gobelet trayeur (59, 60) sur un trayon (5, 6, 7, 8) à traire, dont la position est localisée par un détecteur (49, 50, 54, 83, 84) et comparée à une position occupée respectivement par un dispositif de mise en place (131), position qui est modifiée par rapport au trayon (5, 6, 7, 8) pendant un temps suffisamment long pour que le dispositif de mise en place (131) ait achevé de placer le gobelet trayeur (59, 60) sur le trayon (5, 6, 7, 8), caractérisé en ce que le dispositif de mise en place (131) est déplacé spatialement au moyen de guidages (16, 17, 18) linéaires mobiles dans des directions respectivement superposées, le dispositif de mise en place (131) étant disposé sur un guidage (17) s'étendant transversalement au sens longitudinal d'une vache (2) et dont l'extrémité (24) pousse le dispositif (131) sous la vache (2) à traire.

2. Procédé selon la revendication 1, caractérisé en ce que la poussée du dispositif de mise en place (131) s'effectue dans les directions respectivement définies par les divers guidages (16, 17, 18) dans un ordre prédéterminé.

3. Procédé selon la revendication 1, caractérisé en ce que après chaque changement de sa position, le dispositif d'application (131) est déplacé soit simultanément sur deux guidages (16, 17, 18), soit sur un seul guidage (16, 17, 18).

4. Procédé selon les revendications 1 à 3, caractérisé en ce que le dispositif d'application (131) est commandé par un programme prédéterminé qui a été mémorisé dans une unité de commande (78), pour chaque animal à traire, ce programme étant éventuellement corrigé par des données acquises lors d'une traite.

5. Procédé selon les revendications 1 à 4, caractérisé en ce que les paramètres individuels d'un pis à traire (3) sont détectés par un dispositif palpeur qui est amené au voisinage immédiat dudit pis (3).

6. Procédé selon les revendications 1 à 5, caractérisé en ce que, en direction horizontale le long d'un pis (3) est amené au moins un détecteur (49, 50) qui palpe le pis (3) par rayonnement.

7. Dispositif pour la mise en oeuvre du procédé selon les revendications 1 à 6, comportant un détecteur (49, 50, 54, 83, 84) pour localiser la position du trayon (5, 6, 7, 8), un dispositif d'application (131) localement mobile et une unité de commande (78) pour la détermination de la position du dispositif d'application (131) par rapport au trayon (5, 6, 7, 8) et pour la commande du dispositif d'application (131), caractérisé en ce que trois axes sont disposés respectivement à angle droit et mobiles l'un par rapport à l'autre pour servir de composantes linéaires spatiales, axes dont l'un est réalisé sous la forme d'un guidage mobile (17) à l'extrémité (24) duquel le dispositif d'application (131) est fixé afin de se déplacer transversalement à l'axe longitudinal d'une vache (2) jusqu'à proximité immédiate de son trayon à traire (5, 6, 7, 8).

8. Dispositif selon la revendication 7, caractérisé en ce que les composantes linéaires présentent chacune un entraînement qui est réalisé sous la forme d'un moteur à courant triphasé et régulation de vitesse.

9. Dispositif selon les revendications 7 et 8, caractérisé en ce qu'un premier guidage (16) s'étend de telle sorte qu'une vache à traire (2) peut être alignée par son axe longitudinal le long du premier guidage (16).

10. Dispositif selon les revendications 7 à 9, caractérisé en ce que le premier guidage (16) s'étend le long de plusieurs postes de traite (1, 66, 67), lesquels sont disposés en une rangée.

11. Dispositif selon la revendication 10, caractérisé en ce que sur le dispositif d'application (131) est disposé un organe opérationnel.

12. Dispositif selon les revendications 7 à 11, caractérisé en ce que le guidage (17) est muni sur son extrémité (24) d'une traverse (26) coudée en forme de L et à l'extrémité (27) de laquelle est fixé l'organe opérationnel.

13. Dispositif selon les revendications 7 à 12, caractérisé en ce que, à l'extrémité (27) de la traverse, est prévu un coude (28) dirigé verticalement vers le haut.

14. Dispositif selon les revendications 11 à 13, caractérisé en ce que l'organe opérationnel est réalisé en forme de grappin (30) équipé d'un entraînement pneumatique.

15. Dispositif selon les revendications 7 à 14, caractérisé en ce que, sur au moins un guidage (16, 17, 18), est prévu un dispositif pour le repérage du trayon.

16. Dispositif selon la revendication 15, caractérisé en ce que le dispositif pour le repérage du trayon est réalisé sous la forme d'un chariot d'entraînement (87).

17. Dispositif selon les revendications 15 et 16, caractérisé en ce que le chariot d'entraînement (87) est désaccouplé dans une position définie.

18. Dispositif selon les revendications 7 à 17, caractérisé en ce que le guidage (18) situé en direction verticale est renforcé par un ressort.

19. Dispositif selon les revendications 11 à 18, caractérisé en ce que l'organe opérationnel présente un espace intérieur (33) pour le logement d'au moins un gobelet trayeur (59, 60).

20. Dispositif selon les revendications 11 à 18, caractérisé en ce que l'organe opérationnel présente un espace intérieur (33) pour le logement d'une trayeuse complète (4 gobelets trayeurs).

21. Dispositif selon les revendications 7 à 20, caractérisé en ce que sur chaque poste de traite (1, 66, 67), est prévu un dispositif support (95) pour les gobelets trayeurs (91, 92, 93, 94).

22. Dispositif selon la revendication 21, caractérisé en ce que, dans le dispositif support (95), sont prévues des retenues (96, 97, 98, 99) à l'intérieur de chacune desquelles un gobelet trayeur (91, 92, 93, 94) vient s'appliquer sur sa face extérieure.

23. Dispositif selon les revendications 21 et 22, caractérisé en ce que, à travers chacune des retenues (96, 97, 98, 99) s'étend un tuyau à lait (100) dont chacun assure la liaison entre le gobelet trayeur (91, 92, 93, 94) et une machine à traire (77).

24. Dispositif selon les revendications 21 à 23, caractérisé en ce que, sur chaque gobelet trayeur (91, 92, 93, 94), sont fixées, pour servir de liaison avec un automatisme de prélèvement, des cordelettes (105) qui passent à travers les retenues (96, 97, 98, 99).

25. Dispositif selon les revendications 21 à 24, caractérisé par des détecteurs pour la vérification de la position exacte des gobelets trayeurs (91, 92, 93, 94) placés dans les retenues (96, 97, 98, 99).

26. Dispositif selon les revendications 21 à 25, caractérisé par un dispositif de couplage (106) destiné à relier les gobelets trayeurs (91, 92, 93, 94) à un canal (111) pour produits de rinçage.

27. Dispositif selon les revendications 11 à 26, caractérisé en ce que, dans une zone entourant l'organe opérationnel, est fixé un système détecteur pour le repérage des trayons (5, 6, 7, 8).

28. Dispositif selon la revendication 27, caractérisé en ce que le système détecteur est disposé sur deux branches (41, 42) qui peuvent être alignées de telle sorte que le pis (3) de la vache à traire (2) se trouve entre ces branches.

29. Dispositif selon la revendication 28, caractérisé en ce que, transversalement à la direction longitudinale des branches (41, 42), des détecteurs (49, 50) sont orientés en direction de la position prévue du pis.

30. Dispositif selon la revendication 29, caractérisé en ce que les détecteurs (49, 50) sont des détecteurs de rayonnement infrarouge.

31. Dispositif selon les revendications 28 à 30, caractérisé en ce que les branches (41, 42) sont reliées mutuellement par une traverse (38) dans laquelle est prévu un détecteur (54) orienté parallèlement à la direction longitudinale desdites branches (41, 42).

32. Dispositif selon la revendication 31, caractérisé en ce que le détecteur (54) orienté en direction longitudinale des branches (41, 42) est un détecteur à ultrasons.

33. Dispositif selon les revendications 27 à 32, caractérisé en ce que, dans une unité de commande (78), sont mémorisées en outre des données concernant la position de la vache (2) à traire, du pis (3) ainsi que des trayons (5, 6, 7, 8).

34. Dispositif selon la revendication 33, caractérisé en ce que, dans l'unité de commande (78), sont mémorisées des données qui correspondent à une position définie manuellement des guidages (16, 17, 18).

35. Dispositif selon les revendications 16 à 34, caractérisé en ce que, sur le chariot d'entraînement (87), sont prévus les détecteurs (83, 84) servant à enregistrer les mouvements de l'animal pendant une application de gobelets trayeurs (59, 60).

36. Dispositif selon les revendications 7 à 35, caractérisé en ce que le système détecteur est une caméra.

37. Dispositif selon les revendications 7 à 35, caractérisé en ce que le système détecteur est un système optique qui est relié, par une conduite, à une caméra.

38. Dispositif selon les revendications 36 et 37, caractérisé en ce que le trajet des rayons du système détecteur est orienté verticalement vers le haut, en direction des trayons à positionner (5, 6, 7, 8).

39. Dispositif selon les revendications 33 à 38, caractérisé en ce que, dans l'unité de commande (78), sont mémorisées les données pour la régulation d'une machine à traire (77) entièrement automatique.
